# FASCICULE DE BREVET EUROPEEN

(11) **EP 4 403 725 B1**
(45) Date de publication et mention de la délivrance du brevet: **21.05.2025**
(21) Numéro de dépôt: 23215995.4
(22) Date de dépôt: 12.12.2023
(51) Int. Cl.: E04H 4/16

(54) **ROBOT ASPIRATEUR À VOLUTE DOUBLE SORTIE POUR LE NETTOYAGE DE PISCINES**
SAUGROBOTER MIT DOPPELAUSLASSSPIRALE ZUR SCHWIMMBECKENREINIGUNG
SUCTION ROBOT WITH DOUBLE OUTLET VOLUTE FOR CLEANING SWIMMING POOLS

(30) Priorité: 19.01.2023 FR 2300511
(43) Date de publication de la demande: 24.07.2024
(73) Titulaire: Kokido Development Limited, Hong Kong (HK)
(72) Inventeur: BRUNEEL, Jean, 999077 Kowloon (HK); ROUMAGNAC, Max, 33127 Martignas sur Jalle (FR)
(74) Mandataire: Ipside

(56) Documents cités:
- EP-A2- 1 022 411
- FR-A1- 2 896 005
- US-A1- 2022 018 149

## Description

### DOMAINE TECHNIQUE

La présente invention appartient au domaine des robots aspirateurs de nettoyage de piscines, notamment les robots aspirateurs à jet d'eau propulsif, et concerne plus particulièrement un robot aspirateur comprenant une volute double sortie permettant une inversion automatique du sens de déplacement.

### ÉTAT DE L'ART

Les robots aspirateurs pour piscines à inversion de sens de déplacement sont des appareils conçus pour nettoyer les fonds et les parois de piscines de manière autonome. Ils sont motorisés et équipés de moyens leur permettant de se déplacer dans l'eau et de détecter les obstacles.

En règle générale, ces robots aspirateurs se déplacent à l'aide de roues ou de chenilles et sont dotés de moyens d'aspiration et de filtration des débris et particules en suspension dans l'eau, et éventuellement de moyens de nettoyage tels que des brosses fixes ou rotatives pour désincruster les parois et le fond de la piscine. Lorsque ces robots détectent un obstacle, ils inversent leur sens de déplacement pour contourner l'obstacle et continuer le nettoyage.

Pour couvrir toute la surface à nettoyer, les robots de ce type inversent leur sens de déplacement à la rencontre d'un obstacle et se déplacent selon une direction différente entre l'aller et le retour (zigzag). De nombreux moyens de détection d'obstacle et d'inversion de sens de déplacement sont connus.

Certains robots, tels que celui décrit dans le document CN114687593, utilisent deux moteurs distincts, un moteur pour chaque sens de déplacement.

D'autres robots, plus simples et plus économiques, utilisent un système de propulsion bidirectionnelle à un seul moteur et une seule turbine placée dans une volute.

Pour de tels robots « monomoteur », l'inversion du sens du jet d'eau propulsif, et donc du sens de déplacement, au contact d'un obstacle peut s'obtenir :
- soit avec une volute rotative à sortie unique bloquée dans deux positions opposées, tel que décrit dans le document FR3041982 (du même inventeur) ou EP3805487 ;
- soit avec une volute fixe à deux sorties opposées, alternativement ouvertes ou fermées par une vanne rotative actionnée par des mécanismes plus ou moins complexes, tel que décrit dans le document CN112623173, CN112591067 ou CN114837476.

Ces deux types de systèmes actuels sont basés sur la mise en œuvre de pièces rotatives, à savoir une volute rotative ou une volute fixe avec une vanne rotative, et sont par conséquent relativement complexes à réaliser, couteux et peuvent être soumis à des aléas de fonctionnement dans un milieu tel qu'une piscine (eau chargée, sable, etc.).

Il n'existe à la connaissance du demandeur aucun robot aspirateur à inversion automatique du sens de déplacement dans lequel la volute n'est ni rotative ni ne comprend une vanne rotative. Le document FR2896005A décrit un robot aspirateur submersible pour le nettoyage de bassins artificiels comprenant les caractéristiques du préambule de la revendication 1.

### PRÉSENTATION DE L'INVENTION

La présente invention vise à pallier tout ou partie des inconvénients de l'art antérieur exposés ci-avant en proposant un système avec une volute fixe à double sortie, chaque sortie étant munie d'un clapet. Ce système très simple mécaniquement, insensible à l'usure et au blocage par des débris qui ne seraient pas arrêtés par le filtre (filtre déchiré ou oublié par l'utilisateur) est donc fiable et présente un coût de fabrication réduit par rapport aux systèmes connus utilisant des pièces rotatives.

À cet effet, la présente invention a pour objet un robot aspirateur submersible pour le nettoyage de bassins artificiels notamment une piscine, comportant : un corps principal comprenant un bac à débris ; un filtre ; une volute à deux sorties de refoulement ; un système d'aspiration et de propulsion produisant une circulation d'eau dans la volute et un jet d'eau propulsif ; et des moyens d'alimentation électrique. Ce robot aspirateur est remarquable en ce que la volute est fixe et comporte un clapet à chacune desdites sorties présentant une position ouverte et une position fermée, les positions desdits clapets s'alternant automatiquement en fonction du sens de la circulation d'eau dans la volute de sorte à inverser le sens du jet d'eau propulsif, et donc le sens de déplacement du robot.

Selon un aspect de l'invention, le système d'aspiration et de propulsion comprend un moteur électrique et une turbine centrifuge couplée au moteur, la rotation de ladite turbine dans un sens produisant une circulation d'eau dans la volute dans le même sens.

Avantageusement, la turbine peut comporter des aubes orientables en fonction de son sens de rotation.

Selon un aspect de l'invention, chaque clapet présente une position opposée à celle de l'autre clapet lorsque le système d'aspiration et de propulsion est en marche, et une position ouverte par défaut lorsque ledit système est à l'arrêt.

Selon un autre aspect de l'invention, chaque clapet est soumis à une force de rappel élastique qui tend à le maintenir dans sa position ouverte. Autrement dit, les clapets sont monostables, avec la position ouverte comme position de repos.

Plus particulièrement, la force de rappel est assurée par un ressort de torsion, placé dans une charnière d'articulation, ou par une flexibilité du clapet lui-même.

De façon particulièrement avantageuse, le système d'aspiration et de propulsion est configuré pour inverser le sens de la circulation d'eau dans la volute lorsque le robot s'immobilise contre un obstacle.

A cet effet, le robot comporte par exemple un capteur d'arrêt pour commander l'inversion du sens de la circulation d'eau dans la volute.

Selon un mode de réalisation, les moyens d'alimentation électrique comprennent une batterie électrique placée dans un compartiment étanche pour conférer au robot un caractère autonome.

Selon un mode de réalisation, le robot comporte en outre des moyens de déviation de trajectoire tels qu'un déflecteur du jet d'eau propulsif, pour que le robot ne suive pas une même trajectoire à l'aller et au retour.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un robot aspirateur à volute double sortie, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en perspective d'un robot aspirateur selon un mode de réalisation de l'invention ;
- Figure 2 : une vue de face du robot aspirateur ;
- Figure 3 : une vue de côté du robot aspirateur ;
- Figure 4 : une vue de dessus du robot aspirateur ;
- Figure 5 : une vue de dessous du robot aspirateur ;
- Figure 6 : une vue en perspective du robot aspirateur sans le compartiment étanche, laissant entrevoir la volute double sortie ;
- Figure 7a : un schéma de la volute avec les clapets en position ouverte, lorsque le robot est hors fonctionnement ;
- Figure 7b : un schéma de la volute lorsque le robot se déplace dans un sens ;
- Figure 7c : un schéma de la volute lorsque le robot se déplace dans le sens inverse à celui de la figure 7b.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un robot aspirateur à volute double sortie permettant une inversion automatique du sens de déplacement, destiné principalement au nettoyage de piscines. Cet exemple, non limitatif, est donné pour une meilleure compréhension de l'invention et n'exclut pas l'utilisation du robot aspirateur pour nettoyer d'autres types de bassins dont la forme du fond permet le déplacement du robot.

Dans la présente description, l'expression « volute double position », ou simplement « volute double », désigne une volute présentant deux sorties opposées. Les deux sorties d'une volute double peuvent être diamétralement opposées comme dans l'exemple qui sera décrit.

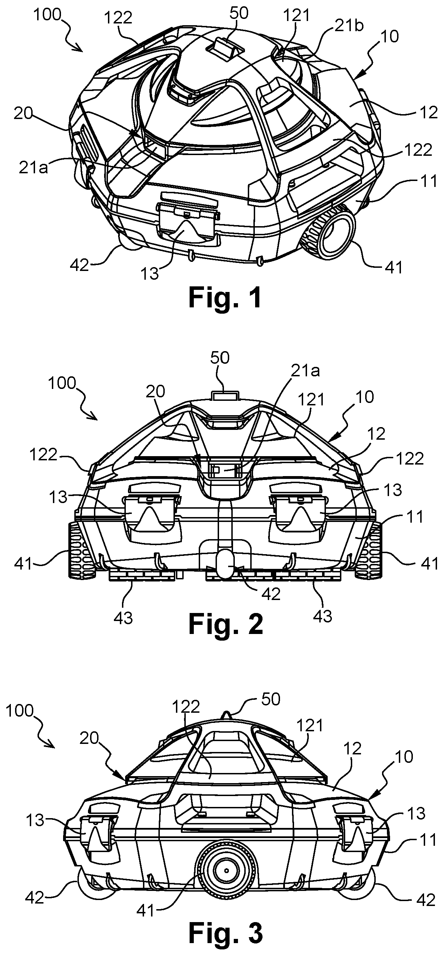

Les figures 1 à 5 représentent les différentes vues d'un robot aspirateur 100 submersible à volute double, comportant un corps principal 10 constitué d'un bac à débris 11 et d'un capot 12, un système d'aspiration et de propulsion placé dans ledit corps et permettant l'aspiration de l'eau du bassin avant sa filtration et son refoulement sous forme de jet d'eau propulsif, et une volute 20 dite double car présentant deux sorties 21a et 21b refoulant, une à la fois, l'eau aspirée selon le sens de déplacement du robot.

Le robot aspirateur 100 comporte en outre un filtre placé dans le bac à débris 11, des moyens d'alimentation électrique tels qu'une batterie électrique, un interrupteur 50, et des moyens de déplacement notamment des roues motrices 41, des roulettes pivotantes 42 et des rouleaux 43.

Le corps principal 10, selon l'exemple de réalisation illustré, présente une forme compacte pour une meilleure stabilité et un contour sensiblement hexagonal pour mieux interagir avec les obstacles et atteindre les coins de la piscine. Bien entendu, d'autres formes et dimensions restent possibles.

Le corps principal 10 est réalisé en deux parties séparables qui sont le bac à débris 11 et le capot 12. Ces deux parties sont assemblées de façon réversible et verrouillée par des moyens de fermeture 13, notamment des fermoirs à levier comme sur l'exemple illustré. Cela permet d'accéder rapidement à l'intérieur du corps principal 10 afin de vider et de nettoyer le bac à débris 11, ou de procéder à l'entretien du robot.

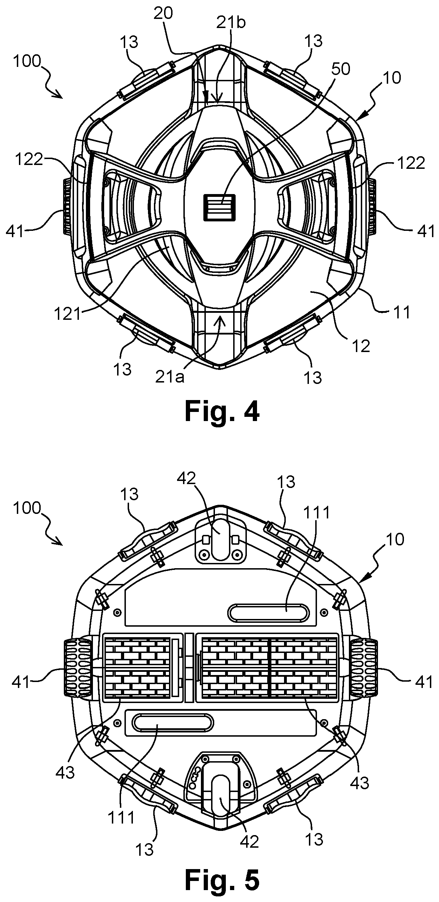

Le bac à débris 11 définit un volume intérieur de collecte des débris aspirés et retenus par le filtre, et comporte une ou plusieurs bouches d'aspiration 111 visibles sur la figure 5.

Les bouches d'aspiration 111 sont de préférence désaxées et présentent des sections réduites pour augmenter la vitesse d'aspiration et, par là-même, la dépression à l'entrée du conduit d'aspiration, pour une aspiration plus efficace.

Le capot 12 ferme le bac à débris 11 et est surmonté, selon l'exemple illustré, d'un compartiment étanche 121 pour recevoir tout ou partie des moyens d'alimentation électrique ainsi que d'autres servitudes électroniques du robot aspirateur 100.

Le capot 12 comporte en outre des moyens de préhension 122 disposés d'un côté et de l'autre du robot 100 et permettant à l'utilisateur d'ouvrir ledit capot ou simplement de soulever le robot. Selon l'exemple illustré, les moyens de préhension 122 sont réalisés dans une structure arquée couvrant partiellement le capot 12.

Le système d'aspiration et de propulsion correspond à un groupe motopropulseur électrohydraulique et comprend classiquement un moteur électrique et une turbine centrifuge couplée à celui-ci, avec un mécanisme de réduction à un ou plusieurs étages entre les deux. La turbine est placée dans la volute 20 pour former la pompe d'aspiration. En effet, la rotation de la turbine centrifuge, entrainée par le moteur, produit une aspiration de l'eau et son refoulement à haute vitesse, par l'une des sorties 21a ou 21b de la volute.

Les sorties 21a et 21b sont des tuyères refoulant l'eau aspirée sous forme de jet d'eau pour propulser le robot par réaction dans le sens opposé au sens du jet d'eau.

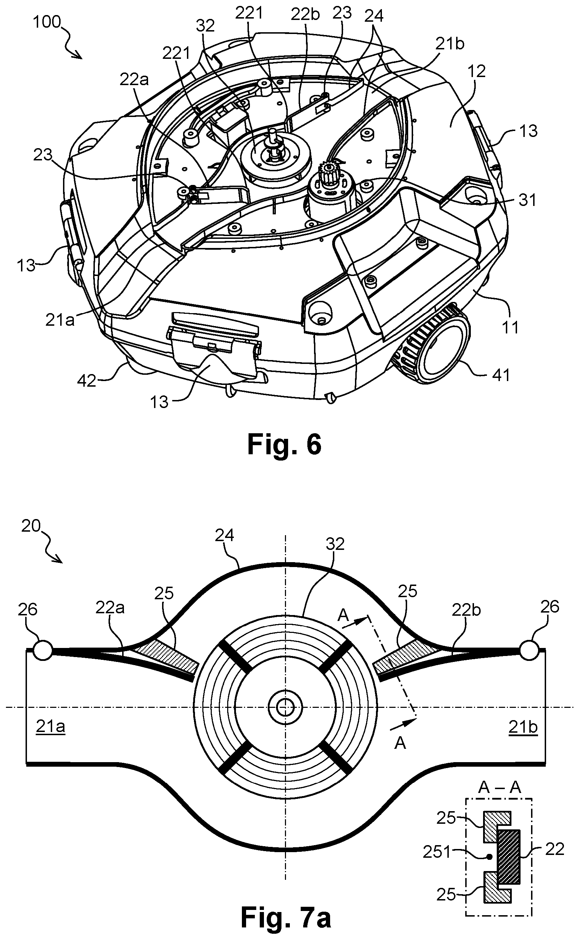

La figure 6 représente partiellement le robot aspirateur 100 avec le compartiment étanche ôté, laissant entrevoir la volute 20 et ses deux sorties 21a et 21b.

Selon cet exemple de réalisation, le système d'aspiration et de propulsion comprend un moteur électrique 31, placé partiellement sous le capot 12, et une turbine centrifuge 32, à quatre ou cinq aubes par exemple, placée au centre de la volute 20. Le système d'aspiration et de propulsion comprend également, entre le moteur 31 et la turbine 32, des pignons de réduction non représentés, dont seul le premier pignon monté sur l'arbre du moteur est visible.

Le moteur électrique 31, et donc la turbine 32, peuvent tourner dans les deux sens et permettent ainsi à la volute 20 d'inverser le sens de déplacement du robot 100 grâce à deux clapets 22a et 22b montés respectivement au niveau des sorties 21a et 21b.

En effet, chaque clapet 22 présente deux positions : une position ouverte dégageant le passage de la sortie 21 correspondante ; et une position fermée bloquant ladite sortie. Les positions d'un clapet s'alternent avec les positions de l'autre clapet lors du fonctionnement du robot 100 et imposent son sens de déplacement à ce dernier. Autrement dit, lorsqu'un clapet est ouvert, l'autre est fermé et inversement.

Les figures 7a à 7c schématisent le principe de la volute double 20 et permettent d'en comprendre aisément le fonctionnement.

La figure 7a représente la volute 20 lorsque le robot est au repos, c'est-à-dire lorsque la turbine 32, et donc le robot, est immobile. Dans cette configuration, les clapets 22a et 22b occupent tous deux une position ouverte, qui est leur position par défaut, et laissent donc les sorties 21a et 21b dégagées.

En position ouverte, chaque clapet 22 est plaqué soit directement contre une paroi adjacente 24 de la volute 20, comme c'est le cas du clapet 22b sur la figure 6, soit contre une butée 25 comme représenté sur les figures 7a à 7c. Cette position ouverte est maintenue élastiquement grâce à une force de rappel en l'absence de pression exercée par l'eau.

A cet effet, les capets 22 peuvent soit être articulés via un moyen élastique ressort de torsion), soit présenter une élasticité structurale (flexibilité).

Selon le mode de réalisation de la figure 6, chaque clapet 22 est articulé sur une charnière comprenant un ressort de torsion 23 qui a tendance à ramener le clapet à sa position ouverte. Dans ce cas, les clapets 22 sont de préférence rigides, mais peuvent parfaitement être semirigides, voire flexibles.

Selon le mode de réalisation des figures 7a à 7c, les clapets 22 sont flexibles et peuvent se déformer entre la position ouverte et la position fermée. Dans ce cas, les clapets ne sont pas articulés, mais encastrés à leurs points d'attache 26.

Dans un cas comme dans l'autre, les clapets 22 sont dimensionnés pour basculer de la position ouverte à la position fermée sous l'effet de la pression de l'eau éjectée par la turbine 32 dans ce sens, et de la position fermée à la position ouverte sous l'effet de la force de rappel.

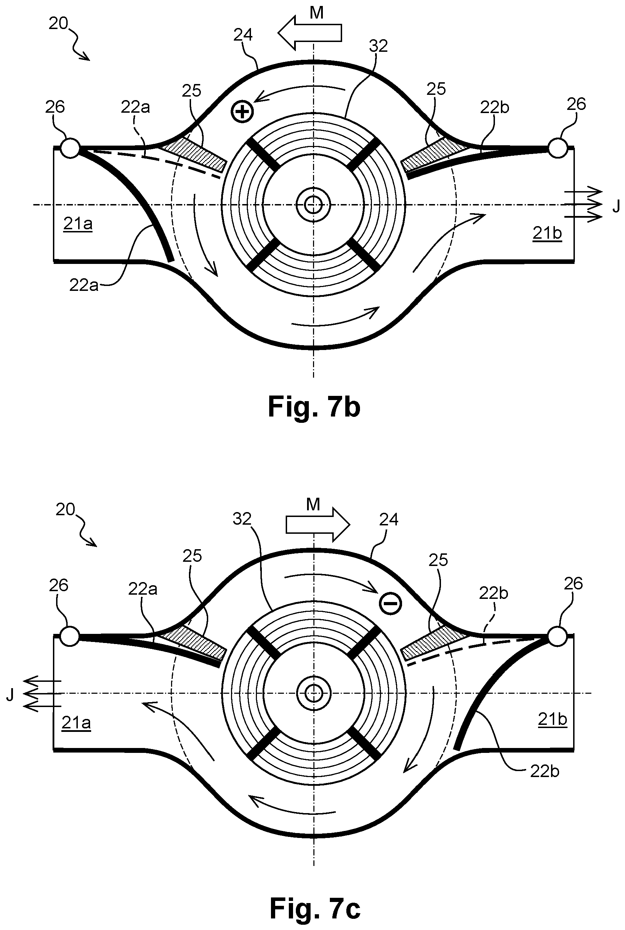

La figure 7b représente la volute 20 lorsque le robot se déplace dans le sens indiqué par la flèche M (vers la gauche de la figure). Ce sens de déplacement est dû à la rotation de la turbine 32 dans le sens positif, indiqué par le symbole + sur la figure 7b, permettant de générer une circulation de l'eau aspirée dans le même sens, ce qui vient fermer le clapet 22a (clapet gauche sur la figure) tout en maintenant ouvert le clapet 22a opposé, créant ainsi un jet d'eau J monodirectionnel par la sortie 21b restée ouverte. L'eau ainsi éjectée crée une force propulsive de sens opposé selon le principe de l'action et de la réaction.

Inversement, la figure 7c représente la volute 20 lorsque le robot se déplace dans le sens opposé au premier et indiqué par la flèche M (vers la droite de la figure). Dans ce cas, la turbine 32 tourne dans le sens négatif, indiqué par le symbole - sur la figure 7c, et génère une circulation de l'eau aspirée dans le même sens, fermant ainsi le clapet 22b (clapet droit sur la figure) et laissant ouvert le clapet 22a opposé et donc la sorite 21a correspondante. Le jet d'eau J résultant sort par cette sortie 21a et propulse le robot dans le sens opposé.

Pour pouvoir basculer entre la position ouverte et la position fermée, chaque clapet 22 présente une surface suffisante sur laquelle s'exerce la pression orthoradiale de l'eau lorsque ledit clapet est en position ouverte. Dans le mode de réalisation de la figure 6, cette surface correspond à une extrémité coudée 221 du clapet 22, tandis que dans le mode de réalisation des figures 7a à 7b, cette surface est atteignable à travers une fenêtre 251 ménagée dans les butées 25 comme représenté sur la section A - A de la figure 7a.

Le robot aspirateur 100 peut alors se déplacer de façon bidirectionnelle pour contourner les obstacles, en inversant son sens de déplacement lorsqu'il rencontre un obstacle, grâce à l'inversion du sens de rotation de la turbine 32 et plus fondamentalement du sens de rotation de l'arbre d'entrainement du moteur 31.

L'inversion du sens de rotation du moteur 31 s'opère lorsque le robot 100 est immobilisé contre un obstacle tel qu'une paroi de piscine. Le robot 100 est équipé à cet effet d'un capteur permettant de détecter l'arrêt du robot 100. Un tel capteur peut être un capteur inertiel, gyroscopique, à effet Hall, hydrodynamique, ou de tout autre type adapté à la présente application.

La commande d'inversion du sens de rotation du moteur 31, à partir de l'information du capteur d'arrêt du robot, est pilotée par la carte électronique du robot.

Auxiliairement, afin d'éviter des aller-retour sur une même trajectoire, le robot 100 peut comporter des moyens utilisant une ou plusieurs roues orientables, un essieu articulé ou des déflecteurs pour dévier le jet d'eau propulsif avec un angle plus ou moins important.

Enfin, le robot peut accessoirement comporter des brosses fixes ou rotatives pour améliorer l'efficacité du nettoyage, surtout lorsque le fond est encrassé.

Il ressort de la présente description que certains éléments non essentiels du robot aspirateur peuvent être modifiés, remplacés ou supprimés sans pour autant sortir du cadre de l'invention défini par les revendications ci-après. Par exemple, le robot peut être alimenté sur secteur via un câble électrique, comporter un diffuseur intégré de traitement de l'eau, avoir un moteur situé à l'extérieur du corps principal pour augmenter le volume du compartiment à débris, etc.

## Revendications

1. Robot aspirateur (100) submersible pour le nettoyage de bassins artificiels, comportant : un corps principal (10) comprenant un bac à débris (11) ; un filtre ; une volute (20) à deux sorties (21a, 21b) de refoulement ; un système d'aspiration et de propulsion (31, 32) produisant une circulation d'eau dans la volute et un jet d'eau propulsif ; et des moyens d'alimentation électrique, la volute étant fixe et comportant un clapet (22a, 22b) à chacune desdites sorties présentant une position ouverte et une position fermée, **caractérisé en ce que** les positions desdits clapets s'alternent automatiquement en fonction du sens de la circulation d'eau dans la volute de sorte à inverser le sens du jet d'eau propulsif.

2. Robot aspirateur selon la revendication 1, dans lequel le système d'aspiration et de propulsion (31, 32) comprend un moteur électrique (31) et une turbine centrifuge (32) couplée au moteur, la rotation de ladite turbine dans un sens produisant une circulation d'eau dans la volute (20) dans le même sens.

3. Robot aspirateur selon la revendication 2, dans lequel la turbine (32) comporte des aubes orientables en fonction de son sens de rotation.

4. Robot aspirateur selon l'une quelconque des revendications précédentes, dans lequel chaque clapet (22a, 22b) présente une position opposée à celle de l'autre clapet lorsque le système d'aspiration et de propulsion (31, 32) est en marche, et une position ouverte par défaut lorsque ledit système est à l'arrêt.

5. Robot aspirateur selon l'une quelconque des revendications précédentes, dans lequel chaque clapet (22a, 22b) est soumis à une force de rappel élastique qui tend à le maintenir dans sa position ouverte.

6. Robot aspirateur selon la revendication 5, dans lequel la force de rappel est assurée par un ressort de torsion (23) ou par une flexibilité du clapet (22a, 22b).

7. Robot aspirateur selon l'une quelconque des revendications précédentes, dans lequel le système d'aspiration et de propulsion (31, 32) est configuré pour inverser le sens de la circulation d'eau dans la volute (20) lorsque le robot s'immobilise contre un obstacle.

8. Robot aspirateur selon la revendication 7, comportant un capteur d'arrêt pour commander l'inversion du sens de la circulation d'eau dans la volute (20).

9. Robot aspirateur selon l'une quelconque des revendications précédentes, dans lequel les moyens d'alimentation électrique comprennent une batterie électrique placée dans un compartiment étanche (121).

10. Robot aspirateur selon l'une quelconque des revendications précédentes, comportant en outre des moyens de déviation de trajectoire tels qu'un déflecteur du jet d'eau propulsif.

## Patentansprüche

1. Tauchsaugroboter (100) zur Reinigung von künstlichen Becken, umfassend: einen Hauptkörper (10), der einen Schmutzbehälter (11) umfasst; einen Filter; eine Spirale (20) mit zwei Auslassöffnungen (21a, 21b); ein Saug- und Antriebssystem (31, 32), das eine Wasserzirkulation in der Spirale und einen Treibwasserstrahl erzeugt; und elektrische Versorgungsmittel, wobei die Spirale feststehend ist und an jedem der Auslässe eine Klappe (22a, 22b) mit einer offenen und einer geschlossenen Stellung aufweist, **dadurch gekennzeichnet, dass** sich die Stellungen der Klappen in Abhängigkeit von der Richtung des Wasserflusses in der Spirale automatisch abwechseln, so dass die Richtung des Treibwasserstrahls umgekehrt wird.

2. Saugroboter nach Anspruch 1, wobei das Saug- und Antriebssystem (31, 32) einen Elektromotor (31) und eine mit dem Motor gekoppelte Zentrifugalturbine (32) umfasst, wobei die Drehung der Turbine in eine Richtung eine Wasserzirkulation in der Spirale (20) in derselben Richtung erzeugt.

3. Saugroboter nach Anspruch 2, wobei die Turbine (32) entsprechend ihrer Drehrichtung schwenkbare Schaufeln aufweist.

4. Saugroboter nach einem der vorhergehenden Ansprüche, wobei jede Klappe (22a, 22b) eine gegenüberliegende Stellung zur anderen Klappe aufweist, wenn das Saug- und Antriebssystem (31, 32) in Betrieb ist, und eine standardmäßig geöffnete Stellung, wenn das System ausgeschaltet ist.

5. Saugroboter nach einem der vorhergehenden Ansprüche, wobei jede Klappe (22a, 22b) einer elastischen Rückstellkraft ausgesetzt ist, die dazu tendiert, sie in ihrer geöffneten Position zu halten.

6. Saugroboter nach Anspruch 5, wobei die Rückstellkraft durch eine Torsionsfeder (23) oder durch eine Flexibilität der Klappe (22a, 22b) gewährleistet ist.

7. Saugroboter nach einem der vorhergehenden Ansprüche, wobei das Saug- und Antriebssystem (31, 32) so eingerichtet ist, dass es die Richtung des Wasserflusses in der Spirale (20) umkehrt, wenn der Roboter gegen ein Hindernis stoppt.

8. Saugroboter nach Anspruch 7, mit einem Stoppsensor zum Steuern der Umkehrung der Richtung des Wasserflusses in der Spirale (20).

9. Saugroboter nach einem der vorhergehenden Ansprüche, wobei die Stromversorgungsmittel eine elektrische Batterie umfassen, die in einem dichten Fach (121) platziert ist.

10. Saugroboter nach einem der vorhergehenden Ansprüche, ferner mit Wegumlenkmitteln wie einer Ablenkvorrichtung für den Treibwasserstrahl.

## Claims

1. Submersible vacuum robot (100) for cleaning artificial basins, including: a main body (10) comprising a debris tray (11); a filter; a volute (20) with two discharge outlets (21a, 21b); a suction and propulsion system (31, 32) producing a circulation of water in the volute and a propulsive water jet; and electric power supply means, the volute being fixed and including a valve (22a, 22b) at each of said outlets having an open position and a closed position, **characterized in that** the positions of said valves automatically alternate according to the direction of the circulation of water in the volute so as to reverse the direction of the propulsive water jet.

2. Vacuum robot according to claim 1, wherein the suction and propulsion system (31, 32) comprises an electric motor (31) and a centrifugal turbine (32) coupled to the motor, the rotation of said turbine in a direction producing a circulation of water in the volute (20) in the same direction.

3. Vacuum robot according to claim 2, wherein the turbine (32) includes blades that can be oriented according to its direction of rotation.

4. Vacuum robot according to any one of the preceding claims, wherein each valve (22a, 22b) has a position opposite to that of the other valve when the suction and propulsion system (31, 32) is on, and an open position by default when said system is off.

5. Vacuum robot according to any one of the preceding claims, wherein each valve (22a, 22b) is subjected to an elastic return force that tends to maintain it in its open position.

6. Vacuum robot according to claim 5, wherein the return force is provided by a torsion spring (23) or by a flexibility of the valve (22a, 22b).

7. Vacuum robot according to any one of the preceding claims, wherein the suction and propulsion system (31, 32) is configured to reverse the direction of the circulation of water in the volute (20) when the robot is immobilized against an obstacle.

8. Vacuum robot according to claim 7, including a stop sensor for controlling the reversal of the direction of the circulation of water in the volute (20).

9. Vacuum robot according to any one of the preceding claims, wherein the electric power supply means comprise an electric battery placed in a sealed compartment (121).

10. Vacuum robot according to any one of the preceding claims, further including trajectory deflection means such as a deflector of the propulsive water jet.
